(19) Europäisches Patentamt
European Patent Office
Office européen des brevets

(11) **EP 2 495 032 A1**

(12) **EUROPÄISCHE PATENTANMELDUNG**

(43) Veröffentlichungstag:
**05.09.2012 Patentblatt 2012/36**

(51) Int Cl.:
***B01D 53/94*** *(2006.01)*    ***F01N 3/20*** *(2006.01)*

(21) Anmeldenummer: **11001789.4**

(22) Anmeldetag: **03.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **UMICORE AG & CO. KG**
**63457 Hanau-Wolfgang (DE)**

(72) Erfinder:
- **Soeger, Nicola, Dr.**
  **61130 Nidderau (DE)**
- **Adelmann, Katja, Dr.**
  **64297 Darmstadt (DE)**
- **Seyler, Michael, Dr.**
  **63517 Rodenbach (DE)**
- **Pauly, Thomas R., Dr.**
  **61440 Oberursel (Taunus) (DE)**
- **Jeske, Gerald, Dr.**
  **63543 Neuberg (DE)**

(54) **SCR-Katalysator mit verbesserter Kohlenwasserstoffresistenz**

(57)     Beschrieben wird ein Katalysator für die selektive katalytisch Reduktion von Stickoxiden in Dieselmotorenabgasen unter Verwendung von Ammoniak bzw. einer zu Ammoniak zersetzlichen Vorläuferverbindung als Reduktionsmittel. Der Katalysator enthält zwei auf einen Tragkörper aufgebrachte, übereinander liegende Beschichtungen, von denen die erste, direkt auf den Tragkörper aufgebrachte Beschichtung einen Übergangsmetall-ausgetauschten Zeolithen und/oder eine Übergangsmetall-ausgetauschte zeolithähnliche Verbindung enthält und die SCR-Reaktion wirksam katalysiert. Die zweite Beschichtung ist auf die erste Beschichtung aufgebracht, so daß sie diese abgasseitig überdeckt. Sie ist so beschaffen, daß sie den Kontakt von im Abgas vorhandenen Kohlenwasserstoffen mit mindestens drei C-Atomen mit der darunter liegenden Schicht behindert, ohne dabei den Durchtritt von Stickoxiden und Ammoniak zur ersten Beschichtung zu blockieren. Die zweite Beschichtung kann gebildet werden aus kleinporigen Zeolithen und/oder kleinporigen zeolithähnlichen Verbindungen, sowie aus geeigneten Oxiden, insbesondere Siliziumdioxid, Germaniumdioxid, Aluminiumoxid, Titanoxid, Zinnoxid, Ceroxid, Zirkondioxid und Mischungen davon. Neben dem Katalysator selbst werden Wege zu seiner Herstellung beschrieben.

Figur 7

**Beschreibung**

Die Erfindung betrifft einen Katalysator für die selektive katalytische Reduktion von Stickoxiden in den Abgasen von Dieselmotoren, der sich durch eine verbesserte Resistenz gegenüber den ebenfalls im Dieselabgas vorhandenen Kohlenwasserstoffen auszeichnet, sowie dessen Herstellung und Anwendung zur Reinigung von Dieselabgasen insbesondere in automobilen Applikationen.

Das Abgas von Dieselmotoren enthält neben den aus einer unvollständigen Verbrennung des Kraftstoffs resultierenden Schadgasen Kohlenmonoxid (CO) und Kohlenwasserstoffe (HC) Rußpartikel (PM) und Stickoxide ($NO_x$). Außerdem enthält das Abgas von Dieselmotoren bis zu 15 Vol.-% Sauerstoff. Es ist bekannt, daß die oxidierbaren Schadgase CO und HC durch Überleiten über einen geeigneten Oxidationskatalysator in unbedenkliches Kohlendioxid ($CO_2$) umgewandelt und Partikel durch Durchleiten des Abgases durch ein geeignetes Rußpartikelfilter entfernt werden können. Auch Technologien zur Entfernung von Stickoxiden aus Abgasen in Gegenwart von Sauerstoff sind im Stand der Technik gut bekannt. Eines dieser "Entstickungsverfahren" ist das sogenannte SCR-Verfahren (SCR = Selective Catalytic Reduction), d.h. die selektive katalytische Reduktion der Stickoxide mit dem Reduktionsmittel Ammoniak an einem dafür geeigneten Katalysator, dem SCR-Katalysator. Dabei kann Ammoniak als solches oder in Form einer unter Umgebungsbedingungen zu Ammoniak zersetzlichen Vorläuferverbindung dem Abgasstrom zugegeben werden, wobei unter "Umgebungsbedingungen" die Umgebung der zu Ammoniak zersetzlichen Verbindung im Abgasstrom vor SCR-Katalysator verstanden wird. Zur Durchführung des SCR-Verfahrens sind eine Quelle zur Bereitstellung des Reduktionsmittels, eine Einspritzvorrichtung zur bedarfsgerechten Eindosierung des Reduktionsmittels in das Abgas und ein im Strömungsweg des Abgases angeordneter SCR-Katalysator notwendig. Die Gesamtheit aus Reduktionsmittelquelle, SCR-Katalysator und anströmseitig zum SCR-Katalysator angeordneter Einspritzvorrichtung wird auch als SCR-System bezeichnet.

Mit den künftig geltenden gesetzlichen Grenzwerten wird für alle neu zugelassenen Dieselfahrzeuge eine Abgasnachbehandlung zur Entfernung aller vom Motor emittierten Schadgase im allgemeinen unumgänglich sein. Somit wird es für die aktuellen Applikationen zur Dieselabgasnachbehandlung notwendig, Dieseloxidationskatalysator, Dieselpartikelfilter und SCR-Systeme zu kombinieren, wobei die Kombination dieser Aggregate vor allem für den SCR-Katalysator geänderte Betriebsbedingungen mit sich bringt. Derzeit sind drei derartige Systeme in der Erprobung: Im sogenannten "SCRT®-System" nach EP 1 054 722 werden in Strömungsrichtung des Abgases ein Dieseloxidationskatalysator, ein Dieselpartikelfilter und ein SCR-System hintereinander angeordnet. Alternativ kann das SCR-System zwischen einem motornahen Dieseloxidationskatalysator und einem Dieselpartikelfilter im Unterboden des Fahrzeugs (DOC - SCR - DPF) oder vor einer Einheit aus Dieseloxidationskatalysator und Dieselpartikelfilter (SCR-DOC-DPF) angeordnet werden.

Die Kombination von Dieselpartikelfilter und SCR-System in einem Abgasstrang bedingt, daß der SCR-Katalysator in bestimmten Betriebspunkten dauerhaft signifikant höheren HC-Konzentrationen ausgesetzt ist, als dies in bisherigen Applikationen der Fall war. Für diese erhöhten HC-Konzentrationen gibt es mehrere Ursachen:

Zum einen erfolgt die Kalibrierung der innermotorischen Verbrennung nun nicht mehr mit dem Ziel, kostenintensive Abgasnachbehandlungsstufen einzusparen, sondern nach Gesichtspunkten der Leistungsoptimierung, wobei Partikel und HC sowie Stickoxide als Emission gleichberechtigt zugelassen werden. Dies bedingt eine gewisse HC-Grundbelastung des Abgasnachbehandlungssystems, wobei das Abgas bereits deutlich höhere HC-Konzentrationen aufweist, als in den bislang üblichen Anwendungen, in denen SCR-Systeme zum Einsatz kamen. Zum anderen muß das Dieselpartikelfilter in regelmäßigen Abständen regeneriert werden, was unter anderem durch einen kontrollierten Abbrand der Partikellast geschieht. Hierzu muß das Filter auf eine Temperatur, die oberhalb der Rußzündtemperatur liegt, erwärmt werden. Diese Erwärmung (sog. "heat-up") erfolgt durch Nacheinspritzung von Kraftstoff in den Auslaßkolbenhub des Zylinders oder in den Abgasstrang und durch katalytische Umsetzung der unverbrannten Kohlenwasserstoffe auf einem oxidierend wirkenden Katalysator (sog. "heat-up-Katalysator"). Meist übernimmt ein vorgelagerter Dieseloxidationskatalysator die Funktion des "heat-up-Katalysators". Ist dieser nicht vorhanden, so kann gegebenenfalls auch der SCR-Katalysator "heat-up"-Funktionen übernehmen. In jedem Falle stehen während der Filterregeneration vor dem SCR-Katalysator höhere HC-Konzentrationen an, da die nach Zündung eingespritzten Kohlenwasserstoffe während des "heat-ups" katalytisch nicht vollständig verbrannt werden. In einem SCRT®-System, worin dem SCR-Katalysator Dieseloxidationskatalysator und Dieselpartikelfilter vorgelagert sind, tritt nach einer gewissen Laufzeit zudem eine HC-Dauerbelastung des SCR-Katalysators auf, die auf die hydrothermale Alterung der Oxidationsfunktionen in Dieseloxidationskatalysator und im gegebenenfalls katalytisch beschichteten Filter zurückzuführen ist.

Unabhängig von einer Regeneration des Dieselpartikelfilters können weitere Heizmaßnahmen durch Kraftstoffnacheinspritzung beispielsweise zur Kompensation von Kaltstartverzögerungen notwendig sein und zu kurzzeitig drastisch erhöhten HC-Konzentrationen vor SCR-Katalysator führen.

Die genannten Effekte bedingen, daß der SCR-Katalysator in modernen Abgasreinigungs-Kombinationssystemen geänderten Betriebsbedingungen ausgesetzt ist, wobei die vor dem SCR-Katalysator im Abgas vorhandenen HC-Gehalte deutlich höher sind, als in bisherigen Applikationen. Herkömmliche SCR-Katalysatoren zeigen unter diesen Bedingungen im allgemeinen einen deutlichen Einbruch der Stickoxid-Konvertierungsleistungen im Vergleich zu ihrer Aktivität in nicht-Kohlenwasserstoffe-haltigem Abgas. In jüngster Zeit sind auch Kohlenwasserstoff-resistente SCR-Katalysatoren im Stand der Technik beschrieben worden.

So offenbart WO 2009/135588 ein Verfahren zur Behandlung von Stickoxide (NO$_x$) und Kohlenwasserstoffe (HC) enthaltenden Dieselmotorenabgasen umfassend: a) die Zugabe von Ammoniak (NH$_3$) als solchem oder in Form einer Verbindung, die unter Umgebungsbedingungen Ammoniak entstehen läßt, aus einer nicht zum Abgasstrang gehörenden Quelle in den Stickoxide und Kohlenwasserstoffe enthaltenden Abgasstrom; und b) die selektive Umsetzung von NO$_x$ mit dem dem Abgasstrom zugefügten NH$_3$ an einem SCR-Katalysator enthaltend einen mit Kupfer (Cu) und/oder Eisen (Fe) ausgetauschten Zeolithen, der dadurch gekennzeichnet ist, daß die im Abgas enthaltenen Kohlenwasserstoffe durch die molekularsiebartige Wirkung des Zeolithen von den aktiven Zentren im Katalysator, an denen die Umsetzungen stattfinden, ferngehalten werden. Als Zeolithe werden kleinporige Zeolithe, insbesondere Ferrierit, Chabazit und Erionit verwendet, in die die Kohlenwasserstoffe aufgrund ihrer Größe nicht eindringen können.

Diese Kohlenwasserstoff-resistenten SCR-Katalysatoren zeichnen sich zwar dadurch aus, daß ihre Stickoxid-Konvertierungsaktivität im Kohlenwasserstoffe-haltigen Abgas gegenüber ihrer Aktivität im Kohlenwasserstoffe-freien Abgas deutlich weniger absinkt. Allerdings sind die mit diesen Katalysatoren auch im Kohlenwasserstoff-freien Abgas erzielbaren Stickoxid-Konvertierungen insgesamt signifikant schlechter als die herkömmlicher SCR-Katalysatoren. Auch die hydrothermale Alterungsstabilität dieser HC-resistenten Katalysatoren bleibt oft deutlich hinter der hydrothermalen Alterungsstabilität herkömmlicher SCR-Katalysatoren zurück.

Ein erhöhter Gehalt von Kohlenwasserstoffen im zu reinigenden Abgas wirkt sich weiterhin zumeist nachteilig auf die Dauerstabilität der SCR-Katalysatoren aus. Dies gilt insbesondere für herkömmliche SCR-Katalysatoren, deren Funktionalität auf der SCR-Aktivität Übergangsmetall-ausgetauschter Zeolithe mit mittleren oder größeren Porengrößen, wie beispielsweise Mordenit, β-Zeolith, USY, ZSM-5 oder ZSM-20 beruht, da diese Kohlenwasserstoffe aus dem Abgas im Zeolith-Gerüst einspeichern können. Die im Abgas enthaltenen Kohlenwasserstoffe werden bei kälteren Betriebstemperaturen in Konkurrenz zu Ammoniak im Zeolith-Gerüst eingespeichert. Wird der Katalysator dann erhöhten Betriebstemperaturen ausgesetzt, die über der Initialtemperatur (sog. Light-Off) für die katalytische Kohlenwasserstoffoxidation liegen, so "verbrennen" die eingespeicherten Kohlenwasserstoffe im Zeolithen. Durch die freiwerdende Reaktionsenthalpie wird dann im Katalysator eine beträchtliche Exotherme erzeugt, wobei der entsprechende Temperaturanstieg zu einer erheblichen Schädigung der katalytisch aktiven Zentren im zeolithischen Katalysator führen kann.

Der vorliegenden Erfindung lag die Aufgabe zugrunde, SCR-Katalysatoren zur Verfügung zu stellen, die sich gegenüber herkömmlichen, Zeolith-basierten SCR-Katalysatoren durch eine verbesserte HC-Resistenz auszeichnen, die dabei zugleich aber eine höhere SCR-Aktivität vor und nach hydrothermaler Alterung aufweisen als HC-resistente SCR-Katalysatoren nach dem Stand der Technik.

Die Aufgabe wird gelöst durch einen Katalysator für die selektive katalytisch Reduktion von Stickoxiden mit Ammoniak in Kohlenwasserstoffe enthaltenden Abgasen enthaltend: (a) einen Tragkörper; (b) eine erste, direkt auf den Tragkörper aufgebrachte, katalytisch aktive Beschichtung enthaltend einen mit einem oder mehreren Übergangsmetallen ausgetauschten Zeolithen und/oder eine mit einem oder mehreren Übergangsmetallen ausgetauschte zeolithähnliche Verbindung; und (c) eine zweite Beschichtung, die die erste Beschichtung abgasseitig nahezu vollständig überdeckt und so beschaffen ist, daß sie den Kontakt von im Abgas enthaltenen Kohlenwasserstoffen mit mindestens 3 C-Atomen mit der darunter liegenden ersten Beschichtung behindert, ohne dabei den Durchtritt von Stickoxiden und Ammoniak zur ersten Beschichtung zu blockieren.

Unter "zeolithähnlichen Verbindungen" werden im Rahmen dieser Schrift solche verstanden, die eine typische Zeolithstruktur ("Zeolith-Gerüst") ausbilden, jedoch nicht bzw. nicht ausschließlich aus Aluminiumsilikat aufgebaut sind. Hierzu gehören insbesondere Siliziumaluminiumphosphate (SAPO) und Aluminiumphosphate (ALPO).

Die erste, direkt auf den Tragkörper aufgebrachte, katalytisch aktive Beschichtung im erfindungsgemäßen Katalysator katalysiert die Umsetzung von Stickoxiden mit Ammoniak. Sie enthält bevorzugt einen Übergangsmetall-ausgetauschten Zeolithen und /oder eine Übergangsmetall-ausgetauschte zeolithähnliche Verbindung, die ausgewählt ist aus der Gruppe bestehend aus β-Zeolith, ZSM-5, ZSM-20, USY, MOR oder Mischungen davon. Besonders bevorzugt sind β-Zeolith, USY und MOR. Das im Zeolith bzw. in der zeolithähnlichen Verbindung enthaltene Übergangsmetall ist bevorzugt ausgewählt aus der Gruppe bestehend aus Cer, Mangan, Eisen, Kupfer, Silber, Gold, Platin, Palladium und/oder Mischungen davon. Ganz besonders bevorzugt sind Cer, Eisen und Kupfer.

Die zweite Beschichtung im erfindungsgemäßen Katalysator ist so beschaffen, daß sie den Kontakt von im Abgas enthaltenen Kohlenwasserstoffen mit mindestens 3 C-Atomen mit der darunter liegenden, SCR-katalytisch aktiven Schicht behindert, ohne dabei den Durchtritt von Stickoxiden und Ammoniak zur ersten Beschichtung zu blockieren. Diese zweite Beschichtung kann selbst SCR-katalytisch aktiv sein. Bevorzugt besteht die zweite Beschichtung, die die erste Beschichtung abgasseitig nahezu vollständig überdeckt, dann im Wesentlichen aus einem oder mehreren kleinporigen Zeolithen und/oder kleinporigen zeolithähnlichen Verbindungen, die ausgewählt sind aus der Gruppe bestehend aus SAPO-34, CHA, FER, ERI, OFF, ALPO-34 und Mischungen davon. Besonders bevorzugt werden SAPO-34, CHA und FER eingesetzt. Die kleinporigen Zeolithe und/oder kleinporigen zeolithähnlichen Verbindungen sind bevorzugt ausgetauscht mit einem oder mehreren Übergangsmetallen ausgewählt aus der Gruppe bestehend aus Cer, Mangan, Eisen, Kupfer, Silber, Gold, Platin, Palladium und/oder Mischungen davon. Besonders bevorzugt sind Cer, Eisen und Kupfer.

In einer weiteren Ausführungsform trägt die zweite Beschichtung selbst nicht oder nicht wesentlich zur SCR-Aktivität des erfindungsgemäßen Katalysators bei, sondern bewirkt, daß die im Abgas enthaltenen Kohlenwasserstoffe nicht zu den im Zeolithen bzw. im zeolithischen Material der ersten Beschichtung lokalisierten SCR-katalytisch aktiven Zentren vordringen können, ohne dabei das Vordringen der räumlich kleineren Komponenten Stickoxide und Ammoniak zu den katalytisch aktiven Zentren zu behindern. Verhält sich das Material, aus dem die zweite Beschichtung aufgebaut ist, zusätzlich quasi inert hinsichtlich der Oxidation der im Abgas enthaltenen Kohlenwasserstoffe, so wird die katalytische Verbrennung derselben am erfindungsgemäßen SCR-Katalysator unterdrückt und somit lokale thermische Belastungen verhindert, wodurch im allgemeinen eine Verbesserung der thermischen Alterungsstabilität des Katalysators erreicht wird. In einen solchen Fall besteht die zweite Beschichtung des erfindungsgemäßen Katalysators, die die erste Beschichtung abgasseitig nahezu vollständig überdeckt, aus einem oder mehreren Oxiden, welche ausgewählt sind aus der Gruppe bestehend aus Siliziumdioxid, Germaniumdioxid, Aluminiumoxid, Titandioxid, Zinnoxid, Ceroxid, Zirkondioxid und Mischungen davon. Besonders bevorzugt sind Siliziumdioxid, Titandioxid, Aluminiumoxid und Ceroxid, ganz besonders bevorzugt ist Siliziumdioxid. Um eine hinreichende Porosität dieser Schicht und somit eine hinreichende Durchtrittsfähigkeit der Reaktanden Ammoniak und Stickoxide bei zugleich ausreichender Sperrwirkung gegenüber den im Abgas enthaltenen Kohlenwasserstoffen zu gewährleisten, ist der $d_{50}$-Wert der Oxide in der zweiten Beschichtung bevorzugt gleich oder kleiner als 100 nm, besonders bevorzugt gleich oder kleiner als 70 nm. Dabei wird unter dem $d_{50}$-Wert der Partikelgrößenverteilung der Oxide verstanden, daß 50 % des Gesamtvolumens der Oxide nur solche Partikel enthalten, deren Durchmesser kleiner oder gleich dem als $d_{50}$ angegebenen Wert ist.

Es erscheint grundsätzlich möglich, die zweite Beschichtung herzustellen, in dem man ein geeignetes Oxid in Wasser suspendiert, gegebenenfalls durch Mahlung die oben genannte bevorzugte Partikelgrößenverteilung der Oxide in Suspension einstellt und dann einen bereits mit der ersten Schicht versehenen Tragkörper nach einem herkömmlichen, dem Fachmann bekannten Tauch-, Saug- oder Pumpverfahren mit dieser Suspension beschichtet. Jedoch zeichnet sich eine derart hergestellte Schicht vermutlich nur durch eine gewisse Sperrwirkung gegenüber den im Abgas enthaltenen Kohlenwasserstoffen, aber nicht durch die optimal zu erreichende Sperrwirkung gegenüber diesen Kohlenwasserstoffen aus. Um eine verbesserte Sperrwirkung gegenüber den im Abgas enthaltenen Kohlenwasserstoffen zu erreichen, sind zur Ausbildung der zweiten Beschichtung Oxide zu bevorzugen, die keine Fernordnung aufweisen, d.h. in amorpher Form vorliegen.

Bevorzugt wird die zweite Beschichtung des erfindungsgemäßen Katalysators erzeugt durch Imprägnierung eines bereits mit der ersten Beschichtung versehenen Tragkörpers mit einer Lösung enthaltend ein oder mehrere Alkoholate der Formel $(RO)_{n-m}MeR'_m$, wobei n = 3 oder 4 und m < n ist und wobei das Metallion Me ausgewählt ist aus der Gruppe bestehend aus Silizium, Germanium, Aluminium, Titan, Zinn und Zirkonium. In einem zweiten Schritt erfolgt daraus die Herstellung der Oxide, die die zweite Beschichtung bilden, durch Hydrolyse der Alkoholate und Kondensation der Hydrolyseprodukte unter Ausbildung von Me-O-Ketten und -Netzwerken, aus denen sich die Oxide schließlich aufbauen. In diesem Prozeß werden bevorzugt Alkoholate eingesetzt, die als Rest R Methyl-, Ethyl-, Propyl-, Butyl-, Isopropyl- und/oder Phenylgruppen enthalten, sowie Alkoholate, in denen die Gruppe R' ausgewählt ist aus Aminoalkyl-, Isopropyl-, Isobutyl-, Phenyl-, Octyl- oder Methacrylsäure-Alkyl-Ester-Gruppen. Ist Me = Si, so sind die Verbindungen Düsobutyldimethoxysilan, N-(2-Aminoethyl)-3-aminopropyltrimethoxysilan, Phenyltriethoxysilan, Methacryloxypropyltrimethoxysilan und Triethoxyoctylsilan besonders bevorzugt.

Ausführungsformen des erfindungsgemäßen Katalysators eignen sich besonders gut für automobile Applikationen und sind zudem kostengünstig - auch nach vorstehend skizzierten Verfahren - herzustellen, wenn die zweite Beschichtung aus Siliziumdioxid besteht.

Erfindungsgemäße Katalysatoren, deren zweite Beschichtung aus Siliziumdioxid besteht, können alternativ zur vorstehend beschriebenen Weise auch hergestellt werden durch Aufbringen einer wässrigen Suspension von pyrogener Kieselsäure auf einen bereits mit der ersten, zeolithischen Beschichtung versehenen Tragkörper. Dabei ist eine pyrogene Kieselsäure zu wählen, die Primärpartikel mit einem $d_{50}$-Wert der Partikelgrößenverteilung gleich oder kleiner als 100 nm, bevorzugt gleich oder kleiner 70 nm und besonders bevorzugt gleich oder kleiner als 50 nm aufweist. Dabei ist unter $d_{50}$-Wert der Partikelgrößenverteilung zu verstehen, daß 50 % des Gesamtvolumens der pyrogenen Kieselsäure nur solche Partikel enthält, deren Durchmesser kleiner oder gleich dem als $d_{50}$ angegebenen Wert ist. Zum Einsatz in diesem Verfahren bevorzugte pyrogene Kieselsäuren weisen eine Halogenid- und/oder Hydroxid-modifizierte Oberfläche auf, mit Hilfe deren Funktionalität während oder gegebenenfalls nach dem Aufbringen der wässrigen Suspension der Kieselsäure durch Hydrolyse und/oder Kondensation eine Vernetzung der Kieselsäure-Partikel in der resultierenden Schicht erzeugt wird.

Der erfindungsgemäße Katalysator in allen seinen vorstehend beschriebenen und weiteren denkbaren Ausführungsformen eignet sich zur Verminderung von Stickoxiden enthaltend Stickstoffmonoxid und Stickstoffdioxid in Kohlenwasserstoff-haltigen Dieselmotorenabgasen. Hierzu wird das zu reinigende, Stickoxide und Kohlenwasserstoffe enthaltende Abgas nach Zugabe von Ammoniak oder einer zu Ammoniak zersetzlichen Vorläuferverbindung als Reduktionsmittel über einen erfindungsgemäßen SCR-Katalysator geleitet. Bevorzugt wird das zu reinigende, Stickoxide und Kohlenwasserstoffe enthaltende Abgas vor der Zugabe von Ammoniak oder einer zu Ammoniak zersetzlichen Vorläuferverbindung über einen Oxidationskatalysator geleitet, der wirksam ist, um wenigstens einen Teil des im Abgas enthaltenen Stickstoffmonoxids in Stickstoffdioxid umzuwandeln. Im Idealfall führt dies dazu, daß die Stickoxide im zu reinigenden Abgas vor Eintritt in den SCR-Katalysator einen Stickstoffdioxid-Anteil von 30 bis 70 % aufweisen. Dabei kann der Oxidationskatalysator in Form einer katalytisch aktiven Beschichtung auf einem monolithischen Durchflußwabenkörper und/oder auf einem Wandflußfiltersubstrat vorliegen.

Die Erfindung wird im folgenden anhand einiger Beispiele und Figuren eingehender beschrieben. Es zeigen:

**Figur 1:** die Abgastemperatur vor und nach einem SCR-Katalysator nach dem Stand der Technik (VK1), der vor Beginn der Messungen mit Kohlen-wasserstoffen beladen wurde: Das Anheben der Reaktortemperatur / Temperatur vor Katalysator auf 400°C führt zu einer deutlichen, durch HC-Abbrand verursachten Exotherme;

**Figur 2:** die Temperaturdifferenz $\Delta T$ zwischen der Temperatur vor Katalysator und der Temperatur nach Katalysator, wenn der Katalysator vor Beginn der Messung mit Kohlenwasserstoffen beladen wurde, nach Anheben der Reaktortemperatur / Temperatur vor Katalysator auf 400°C: Ver-gleich der durch HC-Abbrand erzeugten Exotherme über dem erfin-dungsgemäßen Katalysator K1 und einem Katalysator nach dem Stand der Technik (VK1);

**Figur 3:** den auf den $\alpha$-Wert normierter $NO_x$-Umsatz über den frisch hergestellten Katalysatoren VK1, VK2 (beide Stand der Technik) und K1 (erfindungs-gemäß) im nicht Kohlenwasserstoffe-haltigen Abgas;

**Figur 4:** den auf den $\alpha$-Wert normierter $NO_x$-Umsatz über den hydrothermal geal-terten Katalysatoren VK1', VK2' (beide Stand der Technik) und K1' (erfindungsgemäß) im nicht Kohlenwasserstoffe-haltigen Abgas;

**Figur 5:** die Temperaturdifferenz $\Delta T$ zwischen der Temperatur vor Katalysator und der Temperatur nach Katalysator, wenn der Katalysator vor Beginn der Messung mit Kohlenwasserstoffen beladen wurde, nach Anheben der Reaktortemperatur / Temperatur vor Katalysator auf 400°C: Ver-gleich der durch HC-Abbrand erzeugten Exotherme über dem erfin-dungsgemäßen Katalysator K2 (frisch hergestellt) bzw. K2' (hydro-thermal gealtert) und einem Katalysator nach dem Stand der Technik **(VK1** bzw. VK1');

**Figur 6:** den auf den $\alpha$-Wert normierter $NO_x$-Umsatz über den frisch hergestellten Katalysatoren VK1, VK2 (beide Stand der Technik) und K2 (erfindungs-gemäß) im nicht Kohlenwasserstoffe-haltigen Abgas;

**Figur 7:** eine TEM-Aufnahme einer Probe aus dem erfindungsgemäßen Kataly-sator K4, in der die räumliche Anordnung der Komponenten des kataly-tisch aktiven Materials zueinander zu erkennen ist: 1: Kugelförmige $SiO_2$-Partikel A: mit Eisen ausgetauschter Zeolith B: Eisenoxid aus im Material enthaltenen, überschüssigem Eisen

**Figur 8:** eine TEM-Aufnahme einer Probe aus dem katalytisch aktiven Material im erfindungsgemäßen Katalysator K4: Im kreisförmig abgegrenzten Be-reich um A ist $SiO_2$ zu erkennen, daß sich dadurch auszeichnet, daß es keine Fernordnung (Kristallgitterebenen) aufweist und somit amorph ist.

**Figur 9:** eine TEM-Aufnahme einer Probe aus dem katalytisch aktiven Material im erfindungsgemäßen Katalysator K4: Im Bereich um C ist mit Eisen ausgetauschter Zeolith zu erkennen, der Kristallgitterebenen mit einem Gitterebenenabstand von ca.1,1 nm aufweist.

**Figur 10:** die Temperaturdifferenz $\Delta T$ zwischen der Temperatur vor Katalysator und der Temperatur nach Katalysator, wenn der Katalysator vor Beginn der Messung mit Kohlenwasserstoffen beladen wurde, nach Anheben der Reaktortemperatur / Temperatur vor Katalysator auf 400°C: Ver-gleich der durch HC-Abbrand erzeugten Exotherme über den erfin-dungsgemäßen Katalysatoren K3 - K5 (frisch hergestellt) bzw. K3' - K5' (hydrothermal gealtert) und einem Katalysator nach dem Stand der Technik (VK1 bzw. VK1');

**Figur 11:** den auf den α-Wert normierter NO$_x$-Umsatz über den frisch hergestellten Katalysatoren VK1, VK2 (beide Stand der Technik) und K3 - K5 (erfin-dungsgemäß) im nicht Kohlenwasserstoffe-haltigen Abgas;

**Figur 12:** den auf den α-Wert normierter NO$_x$-Umsatz über den hydrothermal gealterten Katalysatoren VK1', VK2' (beide Stand der Technik) und K3'-K5' (erfindungsgemäß) im nicht Kohlenwasserstoffe-haltigen Abgas.

**Vergleichsbeispiel 1:**

Es wurde eine Beschichtungssuspension für einen kommerziell erhältlichen SCR-Katalysator auf der Basis von mit Eisen ausgetauschtem β-Zeolith hergestellt. Hierzu wurden ein kommerzieller SiO$_2$-Binder, ein kommerzieller Böhmit-Binder (als Beschichtungshilfsstoffe, Eisen(III)-nitrat-nonahydrat und kommerziell erhältlicher β-Zeolith mit einem molaren SiO$_2$/Al$_2$O$_3$-Verhältnis (SAR) von 25 in Wasser suspendiert und nach einem herkömmlichen Tauchverfahren auf einen keramischen Durchflußwabenkörper mit 62 Zellen pro Quadratzentimeter und einer Zellwandstärke von 0,17 Millimetern aufgebracht. Das beschichtete Bauteil wurde zunächst für 15 Minuten bei 350°C, dann für die Dauer von 2 Stunden bei 500°C kalziniert. Die Beschichtung im so erhaltenen Katalysators VK1 bestand zu 90 % aus β-Zeolith und hatte einen Eisengehalt, berechnet als Fe$_2$O$_3$, von 4,5 Gew.-%.

**Vergleichsbeispiel 2:**

Es wurde ein HC-resistenter SCR-Katalysator gemäß der WO 2009/135588 hergestellt. Hierzu wurde ein kommerziell erhältlicher, kleinporiger Zeolith vom Ferrierit-Typ mit einem molaren SiO$_2$/Al$_2$O$_3$-Verhältnis (SAR) von 20 in Wasser aufgeschlämmt. Der Suspension wurde Eisen(III)-nitrat-nonahydrat zugesetzt. Nach Mahlung wurde diese Suspension zum Beschichten eines monolithischen Durchflußwabenkörpers mit 62 Zellen pro Quadratzentimeter und einer Zellwandstärke von 0,17 Millimetern in einem herkömmlichen Tauchverfahren verwendet. Das beschichtete Bauteil wurde zunächst für 15 Minuten bei 350°C, dann für 2 Stunden bei 500°C kalziniert. Dies Beschichtung des so erhaltenen Katalysators VK2 bestand aus Ferrierit mit einem Eisengehalt von 4,5 %, berechnet als Fe$_2$O$_3$.

**Beispiel 1:**

Auf einen weiteren keramischen Durchflußwabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen gemäß Vergleichsbeispiel 1 aufgebracht.

Dann wurde eine weitere Beschichtungssuspension enthaltend einen kommerziell erhältlichen Ferrierit FER mit einem molaren SiO$_2$/Al$_2$O$_3$-Verhältnis (SAR) von 20 in Wasser hergestellt, mit der der bereits einfach beschichtete Durchflußwabenkörper erneut nach einem herkömmlichen Tauchverfahren belegt wurde, so daß die zweite Schicht aus FER die erste Schicht aus β-Zeolith abgasseitig nahezu vollständig überdeckte. Nach Trocknung und Kalzination bei 350°C für 10 bis 15 Minuten und 500°C für die Dauer von 2 Stunden wurde der Katalysator K1 erhalten.

Den Katalysatoren aus den Vergleichsbeispielen und aus Beispiel 1 wurden jeweils zwei zylindrische Bohrkerne mit einem Durchmesser von 25,4 Millimetern und einer Länge von 76,2 Millimetern entnommen. Die katalytische Aktivität jeweils eines Bohrkerns wurde im frisch hergestellten Zustand untersucht (➜ VK1 bzw. VK2 bzw. K1). Der jeweils andere Bohrkern wurde vor der Untersuchung der katalytischen Aktivität einer synthetischen Alterung im Ofen in einer Atmosphäre enthaltend 10 Vol.-% Wasserdampf und 10 Vol.-% Sauerstoff in Stickstoff für die Dauer von 16 Stunden bei einer Temperatur von 750°C unterzogen (➜ VK1', VK2' und K1').

**Untersuchung zur katalytischen Aktivität:**

In einem ersten Test wurde als Maß für die **HC-Resistenz** der Katalysatoren untersucht, wie hoch die Exothermenerzeugung über einem mit Kohlenwasserstoffen beladenen Katalysator bei thermischer Belastung ist. Verglichen wurde der herkömmliche SCR-Katalysator nach dem Stand der Technik VK1 mit erfindungsgemäßen Katalysatoren.

Hierzu wurden die frisch hergestellten Bohrkerne der Katalysatoren am Motorprüfstand bei 100°C für eine Zeit von 60 Minuten mit Kohlenwasserstoffen beaufschlagt. Anschließend wurden die Bohrkerne in einer Modellgasanlage bei 100°C Reaktortemperatur für 10 Minuten vorkonditioniert (10% O$_2$, 10% CO$_2$, 5% H$_2$O, Balance N$_2$, 4 Nm$^3$/h Gesamtfluss). Dann wurde die Reaktortemperatur innerhalb von 30 Sekunden bei gleicher Gasmischung auf 400°C angehoben. Um ein Maß für die entstandene Exothermie zu erhalten, wurden die Temperaturen des Abgases 5 Millimeter vor Eintritt in den Bohrkern und 76,2 Millimeter nach Austritt aus dem Bohrkern erfasst und ausgewertet.

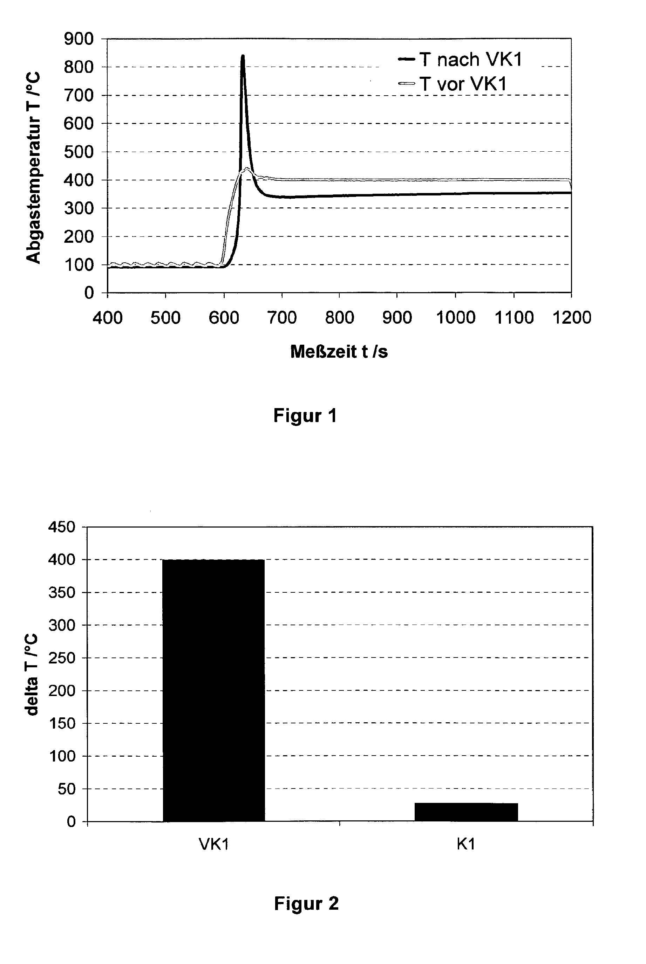

**Figur 1** zeigt beispielhaft die Abgastemperatur 5 Millimeter vor Eintritt in den Vergleichskatalysator VK1 und die gemessene Abgastemperatur 76,2 Millimeter hinter dem Vergleichskatalysator VK1. Kurz nach Anheben der Reaktortemperatur ab t = 600 sec ist eine deutliche Exotherme zu beobachten, die sich in einem Anstieg der Abgastemperatur nach Katalysator auf über 800°C wiederspiegelt.

Um die durch die Katalysatoren erzeugten Exothermen besser vergleichen zu können, wurde Unschärfen in der Temperaturführung dadurch Rechnung getragen, daß die Temperaturdifferenz ΔT zwischen der Temperatur vor Katalysator und der Temperatur nach Katalysator gebildet wurde. Dabei war T(vorKat) die Abgastemperatur 5 Millimeter vor dem Bohrkern und T(nachKat) die Temperatur des Abgases 76,2 Millimeter hinter dem Bohrkern. Die Temperaturen wurden zu einem Zeitpunkt $t_{vorKat} = t_{max, vorKat}$ bzw. $t_{nachKat} = t_{max, nachKat}$ erfasst, wenn das Temperaturmaximum vor bzw. nach Katalysator vorlag.

**Figur 2** zeigt die über den frisch hergestellten Katalysatoren VK1 und K1 gemessenen Temperaturdifferenzen. Während über dem Vergleichskatalysaor VK1 ein Temperaturanstieg von 400° festgestellt wird, der dadurch zustande kommt, daß im Katalysator gespeicherte Zeolithe nach Erreichen der Zündtemperatur für die Kohlenwasserstoffoxidation katalytisch verbrannt werden, ist über dem erfindungsgemäßen Katalysator K1 ein Temperaturanstieg von deutlich weniger als 50° zu beobachten. Dies belegt, daß der erfindungsgemäße Katalysator K1 erheblich weniger Kohlenwasserstoffe speichert als der herrkömmliche SCR-Katalysator VK1 und somit eine höhere HC-Resistenz aufweist. Die Erfinder glauben, daß dies darauf zurückzuführen ist, daß die im erfindungsgemäßen Katalysator enthaltene Deckschicht aus FER verhindert, daß im darunter liegenden β-Zeolithen Kohlenwasserstoffe eingespeichert werden können.

In weiteren Tests wurde die **Stickoxid-Konvertierung** mit Ammoniak über den erfindungsgemäßen Katalysatoren und den Vergleichskatalysatoren VK1 und VK2 in frisch hergestelltem Zustand und nach hydrothermaler Alterung untersucht.

Die Untersuchung erfolgte in einem stationären Test an einer Modellgasanlage mit folgenden Gaskonzentrationen:

| Modellgaskomponente: | Konzentration: |
|---|---|
| NO | 500 Vppm |
| NH$_3$ | 450 Vppm |
| O$_2$ | 5 Vol% |
| H$_2$O | 5 Vol% |
| N$_2$ | Rest |

Das Molverhältnis von Ammoniak zu den Stickoxiden wird bei Untersuchungen der SCR-Aktivität gewöhnlich mit Alpha bezeichnet:

$$\alpha = \frac{c(NH_3)}{c(NOx)}$$

Aus den in der Tabelle aufgeführten Gaskonzentrationen ergibt sich ein Alpha-Wert von α = 0,85. Die Raumgeschwindigkeit in den durchgeführten Modellgastests betrug 30.000 h$^{-1}$.

Die gemessenen NO$_x$-Konvertierungen werden im Rahmen dieser Schrift in auf den α-Wert normierter Form, d.h. als NO$_x$-Umsatz / α-Wert angegeben.

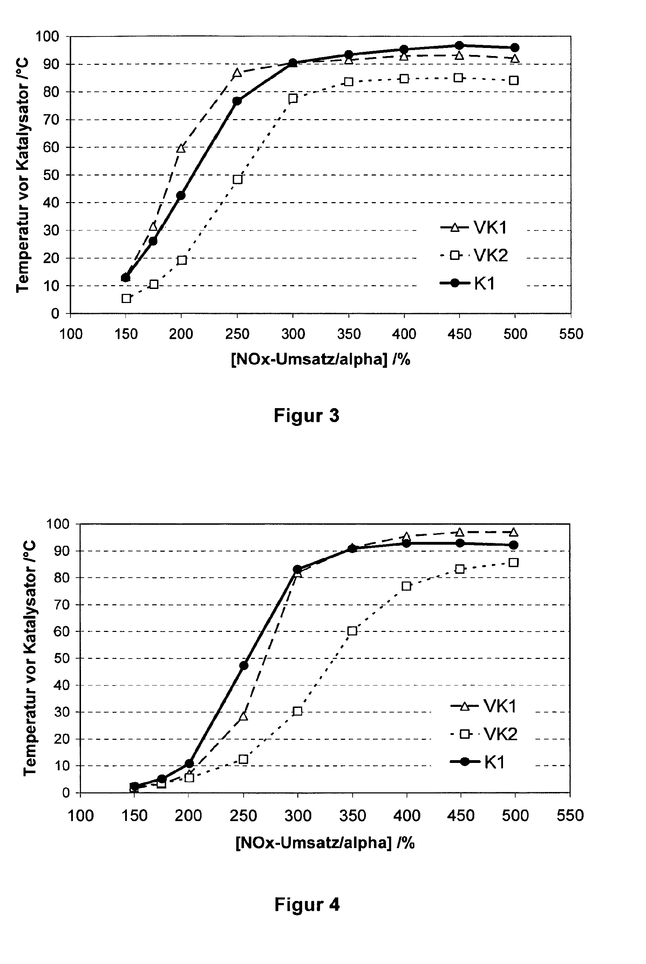

**Figur 3** zeigt die auf den α-Wert normierte NO$_x$-Konvertierung der frisch hergestellten Katalysatoren VK1, VK2 und K1. Wie Figur 3 zu entnehmen ist, zeigt der erfindungsgemäße Katalysator K1 gegenüber dem herkömmlichen SCR-Katalysator VK1 leichte Nachteile im Tieftemperaturbereich, insbesondere bei Betriebstemperaturen zwischen 200 und 300°C. Oberhalb von 300°C ist die Stickoxid-Konvertierungsleistung des erfindungsgemäßen Katalysators mit der des herkömmlichen Katalysators jedoch völlig vergleichbar. Gegenüber dem HC-resistenten SCR-Katalysator nach dem Stand der Technik VK2 zeigt der erfindungsgemäße Katalysator K1 über den gesamten Temperaturbereich signifkant bessere Stickoxid-Konvertierungsleistungen.

Aus der Zusammenschau der Testergebnisse ergibt sich, daß der erfindungsgemäße Katalysator K1 im frisch hergestellten Zustand erheblich höhere SCR-Aktivitäten aufweist, als bisher im Stand der Technik bekannte HC-resistente SCR-Katalysatoren, wobei zugleich die HC-Resistenz des erfindungsgemäßen Katalysators deutlich höher ist als die herkömmlicher, zeolithbasierter SCR-Katalysatoren nach dem Stand der Technik (VK1).

**Figur 4** zeigt die auf den α-Wert normierten Stickoxid-Konvertierungen der hydrothermal gealterten Katalysatoren VK1', VK2' und K'. Der erfindungsgemäße Katalysator zeigt gegenüber dem herkömmlichen SCR-Katalysator VK1 vergleichbare Konvertierungsraten. Gegenüber dem HC-resistenten SCR-Katalysator nach dem Stand der Technik VK2 erweist sich die hydrothermale Alterungsstabilität des erfindungsgemäßen Katalysators K1 als deutlich verbessert, was zu einer signifikant höheren Stickoxid-Konvertierungsleistung nach hydrothermaler Alterung führt.

**Beispiel 2:**

Auf einen weiteren keramischen Durchflußwabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen gemäß Vergleichsbeispiel 1 aufgebracht.

In weiteren Schritten wurde der bereits einfach beschichtete Wabenkörper in einem Tauchverfahren mit einer Lösung aus Tetraethoxysilan (TEOS) in Ethanol imprägniert, bis die aufgenommene Silanmenge 4,3 g/L $SiO_2$, bezogen auf das Volumen des Wabenkörpers entsprach. Nach Trocknung im Leistergebläse bei 50°C und Kalzination bei 350°C für die Dauer von 10 bis 15 Minuten und 500°C für die Dauer von 2 Stunden wurde der Katalysator K2 erhalten. Dem Katalysator wurden zwei Bohrkerne mit einem Durchmesser von 25,4 Millimeter und einer Länge von 76,2 Millimeter entnommen, von denen einer einer synthetischen Alterung im Ofen in einer Atmosphäre enthaltend 10 Vol.-% Wasserdampf und 10 Vol.-% Sauerstoff in Stickstoff für die Dauer von 16 Stunden bei einer Temperatur von 750°C unterzogen (➔ K2') wurde. Die Bohrkerne K2 (frisch hergestellt) und K2' (hydrothermal gealtert) wurden dann den vorstehend beschriebenen Untersuchungen zur katalytischen Aktivität unterzogen.

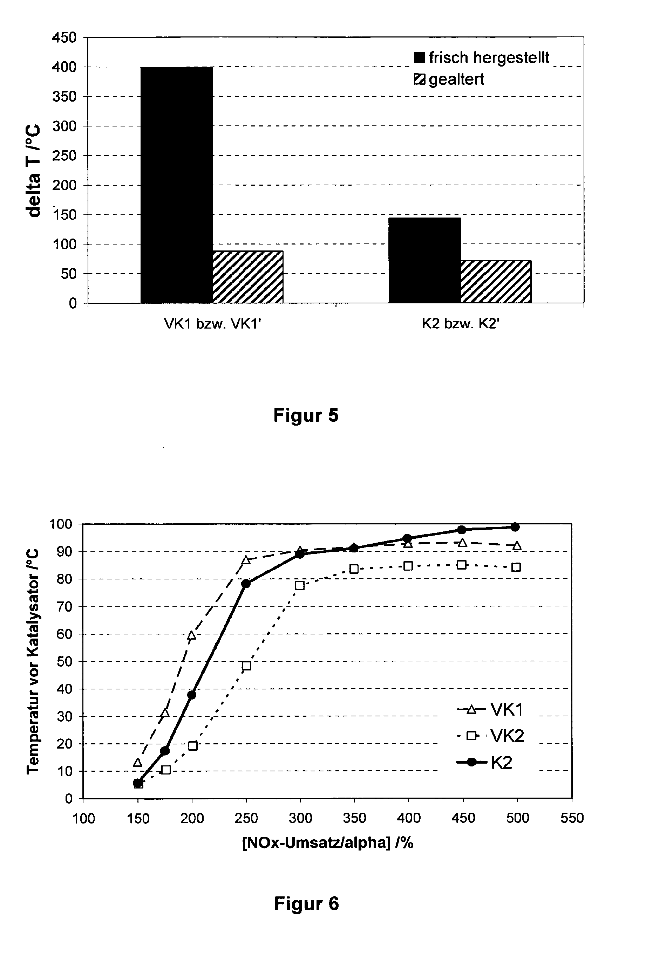

**Figur 5** zeigt die über dem erfindungsgemäßen Katalysator aus Beispiel 2 im frisch hergestellten Zustand (K2) und im gealterten Zustand (K2') erzeugte Exotherme bei Aufheizen nach Beladung mit Kohlenwasserstoffen im Vergleich zum herkömmlichen SCR-Katalysator VK1 (frisch hergestellt) bzw. VK1' (hydrothermal gealtert). Im frisch hergestellten Zustand zeigt der erfindungsgemäße Katalysator K2 eine um mehr als 250° geringere Exotherme als der Vergleichskatalysator. Auch nach hydrothermaler Alterung ist die am erfindungsgemäßen Katalysator erzeugte Exotherme um mehr als 15° geringer. Die Tatsache, daß auch der SCR-Katalysator nach dem Stand der Technik (VK1) nach hydrothermaler Alterung eine signifikant geringere Exotherme zeigt, ist darauf zurückzuführen, daß mit der Alterung eine Schädigung der katalytisch aktiven Zentren eingetreten ist, die auch die Fähigkeit zur katalytischen Kohlenwasserstoffverbrennung negativ beeinflußt. Insgesamt erweist sich der erfindungsgemäße Katalysator K2 somit als deutlich HC-resistenter als der herkömmliche SCR-Katalysator.

**Figur 6** zeigt die auf den $\alpha$-Wert normierte $NO_x$-Konvertierung der frisch hergestellten Katalysatoren VK1, VK2 und K2. Es ist deutlich zu erkennen, daß der erfindungsgemäße Katalysator K2 gegenüber dem HC-resistenten Katalysator nach dem Stand der Technik VK2 eine signifikante SCR-Aktivitätsverbesserung im gesamten Temperaturbereich aufweist. Gegenüber dem herkömmlichen SCR-Katalysator zeigt K2 im nicht Kohlenwasserstoffe-haltigen Abgas leichte Nachteile im Tieftemperaturbereich bei einer zugleich verbesserten Konvertierung im Hochtemperaturbereich ab 400°C.

**Beispiel 3:**

Auf einen weiteren keramischen Durchflußwabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen gemäß Vergleichsbeispiel 1 aufgebracht.

Anschließend wurde der so beschichtete Wabenkörper nach Tauchung in verdünnter Salpetersäure mit einer Lösung enthaltend 15 Gew.-% Tetraethoxysilan (TEOS), 5 Gew.-% Wasser und 80 Gew.-% Ethanol imprägniert, getrocknet und bei 350°C für die Dauer von 10 bis 15 Minuten und 500°C für die Dauer von 2 Stunden kalziniert. Dabei wurde der Katalysator K3 erhalten.

**Beispiel 4:**

Auf einen weiteren keramischen Durchflußwabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen gemäß Vergleichsbeispiel 1 aufgebracht.

Anschließend wurde der so beschichtete Wabenkörper mit einer Lösung enthaltend 15 Gew.-% Tetraethoxysilan (TEOS), 5 Gew.-% Wasser und 80 Gew.-% Ethanol imprägniert, getrocknet und bei 350°C für die Dauer von 10 bis 15 Minuten und 500°C für die Dauer von 2 Stunden kalziniert. Dabei wurde der Katalysator K4 erhalten.

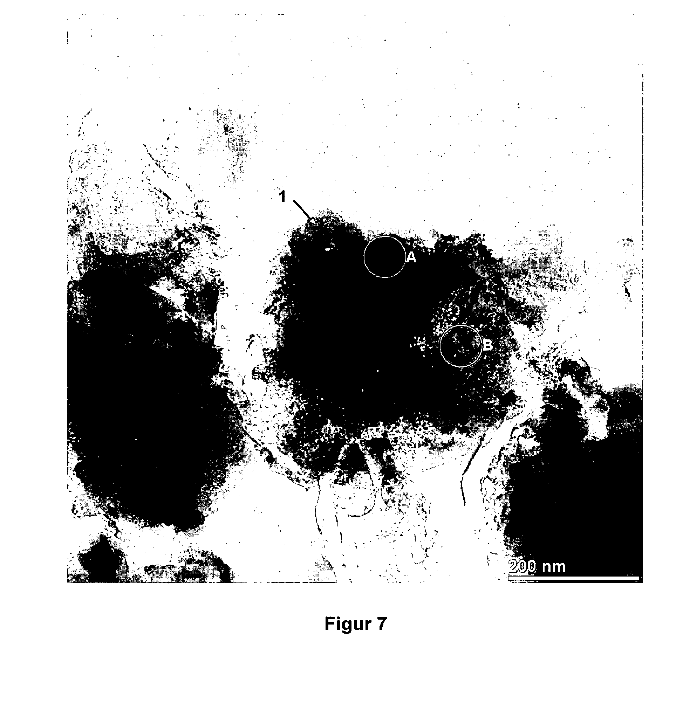

Neben Bohrkernen zur Untersuchung der HC-Resistenz und der katalytischen Aktivität wurden dem Katalysator K4 Proben zur Charakterisierung des katalytisch akiven Materials entnommen. Nach Verfahren, die dem Fachmann der optischen Analysenmethoden geläufiog sind, wurde dem ursprünglich hergestellten Trägerkatalysator K4 eine Probe entnommen und als Ganzes in lichtdurchlässiges Harz eingebettet. Eine daraus abgetrennte Dünnschnittprobe wurde im hochauflösenden Transmissionselektronenmikroskop mit integriertem energiedispersivem Röntgenspektroskop (EDX = energy dispersive X-Ray spectroskopy) untersucht. **Figur 7** zeigt einen repräsentativen Ausschnitt aus der Probe. Darin zu erkennen sind oberflächliche Kugel aus Siliziumdioxid (1; EDX: 51,84 Atom-% O; 48,16 Atom-% Si), die auf mit Eisen ausgetauschten Zeolith-Partikeln (A; EDX: 57,84 Atom-% O; 2,59 Atom-% Al; 39,18 Atom-% Si; 0,4 Atom-% Fe) abgeschieden sind. Zusätzlich ist im Probenmaterial Eisenoxid neben dem mit Eisen ausgetauschten Zeolithen enthalten (B; EDX: 55,78 Atom-% O; 0,93 Atom-% Na; 8,48 Atom-% Al; 24,05 Atom-% Si; 0,51 Atom-% Cl; 10,26 Atom-% Fe), das aus zum Ionenaustausch zugesetzten, überschüssigen Eisenverbindungen während der Herstellung des eingesetzten, kommerziell erhältlichen Zeolithen resultiert.

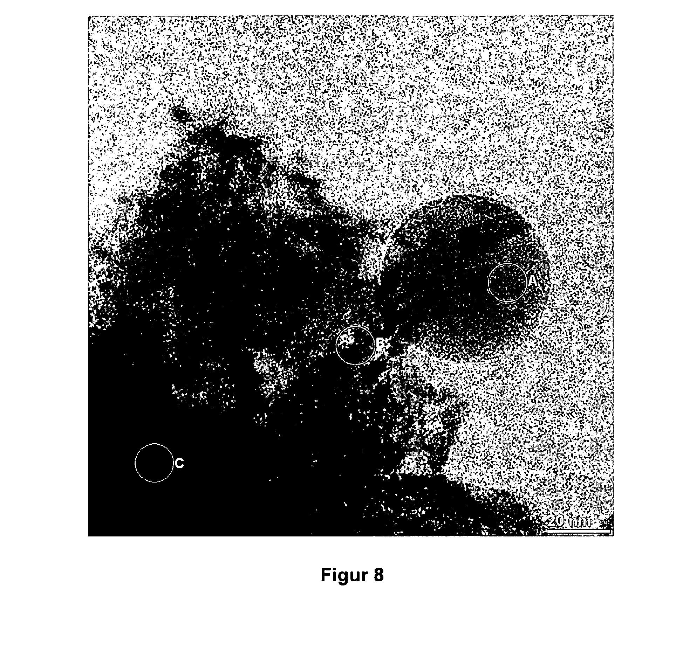

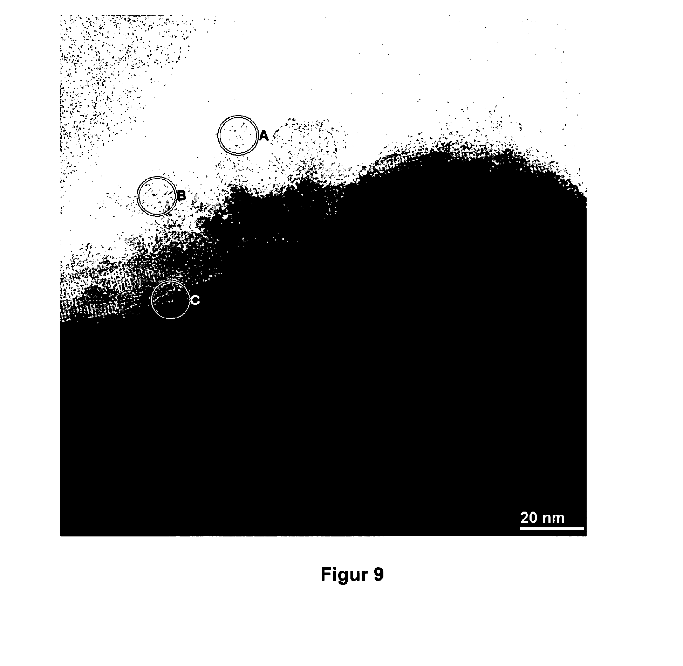

Für die weitere Charakterisierung des katalytisch aktiven Materials wurde eine geringe Menge desselben durch mechanisches Abtrennen vom Tragkörper isoliert. Das resultierende Pulver wurde ebenfalls mit Hilfe der Transmissionselektronenmikroskopie und der energiedispersivem Röntgenspektroskopie untersucht. Die **Figuren 8** und **9** zeigen detaillierte Ausschnitte aus dem Probenmaterial. In **Figur 8** ist im gekennzeichneten kreisförmigen Bereich Siliziumdioxid zu erkennen, daß sich dadurch auszeichnet, daß es keine Fernordnung (Kristallgitterebenen) erkennen läßt. Dies belegt, daß das im erfindungsgemäßen Katalysator vorliegenden SiO$_2$ amorph ist und sich somit von herkömmlichen Siliziumdioxidmaterialien, wie sie beispielsweise kommerziell erworben, vermahlen und in herkömmlichen Tauchverfahren auf einen Tragkörper beschichtet werden können, unterscheidet. **Figur 9** zeigt einen anderen Ausschnitt aus der Probe. Im mit "A" gekennzeichneten Bereich liegt mit Eisen ausgetauschter Zeolith vor. Dieser weist eine klare Fernordnung mit einem Kristallgitterebenenabstand von ca. 1,1 Nanometern auf.

**Beispiel 5:**

Auf einen weiteren keramischen Durchflußwabenkörper mit 62 Zellen pro Quadratzentimeter und einer Zellwandstärke von 0,17 Millimetern wurde eine Beschichtung aus kommerziell erhältlichem, mit Eisen ausgetauschtem β-Zeolithen entsprechend dem Vergleichsbeispiel 1 aufgebracht.

Anschließend wurde der so beschichtete Wabenkörper mit einer Lösung enthaltend 15 Gew.-% Tetraethoxysilan (TEOS), 35 Gew.-% Wasser und 50 Gew.-% Ethanol imprägniert, bis eine Silanmenge entsprechend 6,6 g/L SiO$_2$ aufgebracht war. Nach Trocknung und Kalzination bei 350°C für die Dauer von 10 bis 15 Minuten und 500°C für die Dauer von 2 Stunden wurde der Katalysator K5 erhalten.

Den Katalysatoren aus den Beispielen 3 bis 5 wurden jeweils 2 Bohrkerne mit einem Durchmesser von 25,4 Millimetern und einer Länge von 76,2 Millimetern entnommen, von denen jeweils einer einer synthetischen Alterung im Ofen in einer Atmosphäre enthaltend 10 Vol.-% Wasserdampf und 10 Vol.-% Sauerstoff in Stickstoff für die Dauer von 16 Stunden bei einer Temperatur von 750°C unterzogen wurde. Die Bohrkerne K3, K4 und K5 (frisch hergestellt) sowie K3', K4' und K5' (gealtert) wurden dann den vorstehend beschriebenen Untersuchungen zur katalytischen Aktivität unterzogen.

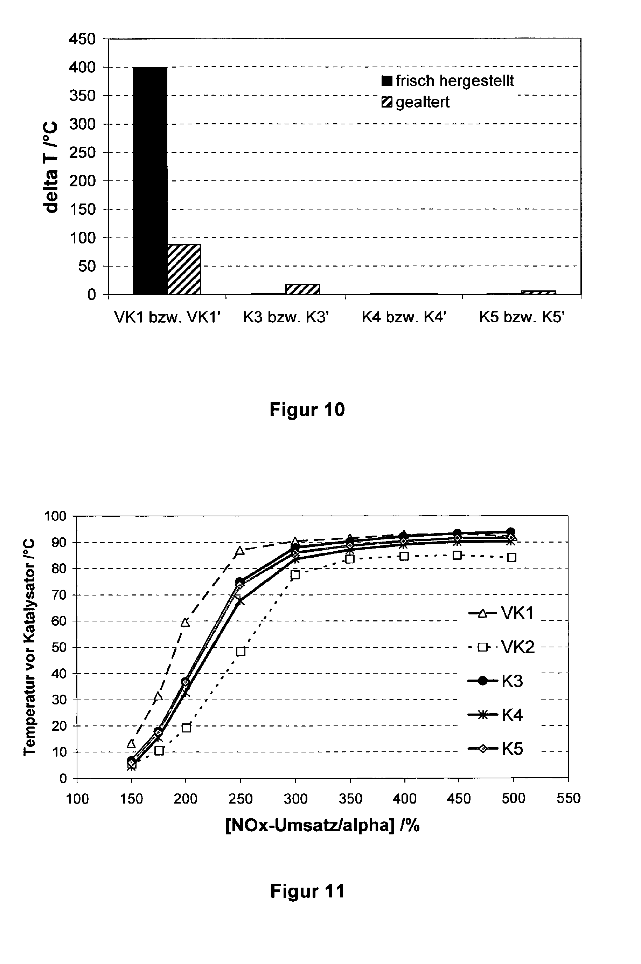

**Figur 10** zeigt einen Vergleich der beobachteten Exothermen bei Temperaturerhöhung über den mit Kohlenwasserstoffen beladenen Katalysatoren aus den Beispielen 3 bis 5 mit dem herkömmlichen SCR-Katalysator aus Vergleichsbeispiel 1 im frisch hergestellten und im gealterten Zustand. Alle erfindungsgemäßen Katalysatoren zeigen sowohl im frisch hergestellten, als auch im hydrothermal gealterten Zustand erheblich geringere bzw. gar keine (!) durch Kohlenwasserstoffabbrand verursachte Exothermen. Sie zeichnen sich folglich ebenfalls durch eine deutlich verbesserte HC-Resistenz aus.

**Figur 11** zeigt die auf den α-Wert normierten NO$_x$-Konvertierungen der erfindungsgemäßen Katalysatoren K3 - K5 im Vergleich zum HC-resistenten SCR-Katalysator nach dem Stand der Technik VK2 im frisch hergestellten Zustand. Alle erfindungsgemäßen Katalysatoren zeichnen sich gegenüber dem HC-resistenten Katalysator nach dem Stand der Technik durch deutlich verbesserte Stickoxid-Konvertierungen im gesamten Temperaturbereich aus.

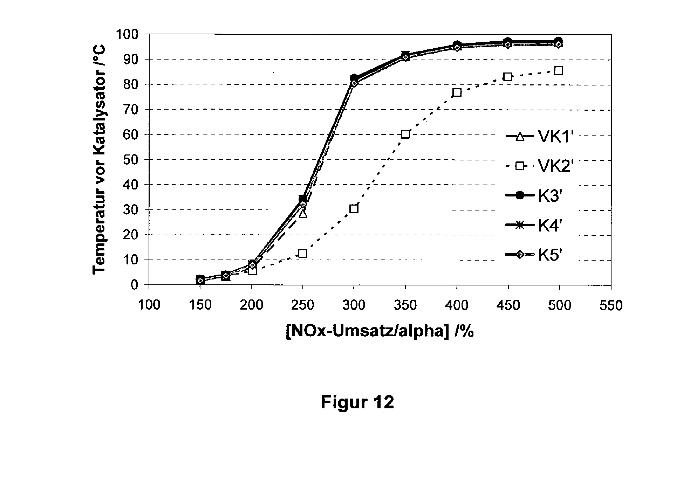

**Figur 12** zeigt die auf den α-Wert normierten NO$_x$-Konvertierungen der erfindungsgemäßen Katalysatoren K3' - K5' im Vergleich den SCR-Katalysatoren nach dem Stand der Technik VK1' und VK2' in hydrothermal gealtertem Zustand. Alle erfindungsgemäßen Katalysatoren zeichnen sich gegenüber dem HC-resistenten Katalysator nach dem Stand der Technik VK2' durch deutlich höhere Stickoxid-Konvertierungen im gesamten Temperaturbereich und somit durch eine signifikant verbesserte Alterungsstabilität aus. Die Alterungsstabilität der erfindungsgemäßen Katalysatoren entspricht der des herkömmlichen, nicht HC-resistenten SCR-Katalysators VK1.

Alle Beispiele zeigen, daß es gelungen ist, SCR-Katalysatoren bereit zu stellen, die gegenüber herkömmlichen, zeolithischen SCR-Katalysatoren eine deutlich verbesserte HC-Resistenz aufweisen, wobei mit ihnen zugleich erheblich höhere Stickoxid-Konvertierungsleistungen erzielt werden können, als mit den bislang im Stand der Technik bekannten HC-resistenten SCR-Katalysatoren.

**Patentansprüche**

1.  Katalysator für die selektive katalytische Reduktion von Stickoxiden mit Ammoniak in Kohlenwasserstoffe enthaltenden Abgasen enthaltend:

    • einen Tragkörper;
    • eine erste, direkt auf den Tragkörper aufgebrachte, katalytisch aktive Beschichtung enthaltend einen mit einem oder mehreren Übergangsmetallen ausgetauschten Zeolithen und/ oder eine mit einem oder mehreren Übergangsmetallen ausgetauschte zeolithähnliche Verbindung, und
    • eine zweite Beschichtung, die die erste Beschichtung abgasseitig nahezu vollständig überdeckt und so beschaffen ist, daß sie den Kontakt von im Abgas enthaltenen Kohlenwasserstoffen mit mindestens 3 C-Atomen mit der darunter liegenden ersten Beschichtung behindert, ohne dabei den Durchtritt von Stickoxiden und Ammoniak zur ersten Beschichtung zu blokkieren.

2.  Katalysator nach Anspruch 1,
    **dadurch gekennzeichnet,**
    **daß** der in der ersten, direkt auf den Tragkörper aufgebrachten, katalytisch aktiven Beschichtung enthaltene, Übergangsmetall-ausgetauschten Zeolith und/oder die Übergangsmetall-ausgetauschte zeolithähnliche Verbindung ausgewählt ist aus der Gruppe bestehend aus β-Zeolith, ZSM-5, ZSM-20, USY, MOR oder Mischungen davon, wobei das Übergangsmetall ausgewählt ist aus der Gruppe bestehend aus Cer, Mangan, Eisen, Kupfer, Silber, Gold, Platin, Palladium und/oder Mischungen davon.

3. Katalysator nach Anspruch 1 oder 2,
   **dadurch gekennzeichnet,**
   **daß** die zweite Beschichtung, die die erste Beschichtung abgasseitig nahezu vollständig überdeckt, aus einem oder mehreren kleinporigen Zeolithen und/oder kleinporigen zeolithähnlichen Verbindungen ausgewählt aus der Gruppe bestehend aus SAPO-34, CHA, FER, ERI, OFF, ALPO-34 und Mischungen davon besteht.

4. Katalysator nach Anspruch 3,
   **dadurch gekennzeichnet,**
   **daß** einer oder mehrere der kleinporigen Zeolithe und/oder der kleinporigen zeolithähnlichen Verbindungen mit einem oder mehreren Übergangsmetallen ausgewählt aus der Gruppe bestehend aus Cer, Mangan, Eisen, Kupfer, Silber, Gold, Platin, Palladium und/oder Mischungen davon ausgetauscht ist.

5. Katalysator nach Anspruch 1 oder 2,
   **dadurch gekennzeichnet,**
   **daß** die zweite Beschichtung, die die erste Beschichtung nahezu vollständig abgasseitig überdeckt, aus einem oder mehreren Oxiden ausgewählt aus der Gruppe bestehend aus Siliziumdioxid, Germaniumdioxid, Aluminiumoxid, Titandioxid, Zinnoxid, Ceroxid, Zirkondioxid und Mischoxiden davon besteht.

6. Katalysator nach Anspruch 5,
   **dadurch gekennzeichnet,**
   **daß** der $d_{50}$-Wert der Partikelgrößenverteilung der Oxide in der zweiten Beschichtung gleich oder kleiner als 100 nm ist, wobei unter dem $d_{50}$-Wert der Partikelgrößenverteilung der Oxide zu verstehen ist, daß 50 % des Gesamtvolumens der Oxide nur solche Partikel enthält, deren Durchmesser kleiner oder gleich dem als $d_{50}$ angegebenen Wert ist.

7. Katalysator nach Anspruch 6,
   **dadurch gekennzeichnet,**
   **daß** die zweite Beschichtung erzeugt wird durch

   • Imprägnierung des bereits mit der ersten Beschichtung versehenen Tragkörpers mit einer Lösung enthaltend ein oder mehrere Alkoholate der Formel $(RO)_{n-m}MeR'_m$, wobei n = 3 oder 4 und m < n ist und das Metallion Me ausgewählt ist aus der Gruppe bestehend aus Silizium, Germanium, Aluminium, Titan, Zinn und Zirkonium, und
   • Hydrolyse der Alkoholate und Kondensation der Hydrolyseprodukte unter Ausbildung der entsprechenden Oxide.

8. Katalysator nach Anspruch 7,
   **dadurch gekennzeichnet,**
   **daß** die Gruppe R in den Alkoholaten ausgewählt ist aus Methyl-, Ethyl-, Propyl-, Butyl-, Isopropyl- und Phenyl-.

9. Katalysator nach Anspruch 8,
   **dadurch gekennzeichnet, daß** die Gruppe R' in den Alkoholaten ausgewählt ist aus Aminoalkyl-, Isopropyl-, Isobutyl-, Phenyl-, Octyl- oder Methacrylsäure-Alkyl-Ester-Gruppen.

10. Katalysator nach einem der Ansprüche 5 bis 9,
    **dadurch gekennzeichnet,**
    **daß** die zweite Beschichtung aus Siliziumdioxid besteht.

11. Katalysator nach Anspruch 5,
    **dadurch gekennzeichnet,**
    **daß** die zweite Beschichtung aus Siliziumdioxid besteht und hergestellt wird durch Aufbringen einer wässrigen Suspension von pyrogener Kieselsäure, die Primärpartikel mit einem $d_{50}$-Wert der Partikelgrößenverteilung gleich oder kleiner als 100 nm aufweist, auf den bereits mit der ersten Beschichtung versehenen Tragkörper, wobei unter dem $d_{50}$-Wert der Partikelgrößenverteilung der pyrogenen Kieselsäure zu verstehen ist, daß 50 % des Gesamtvolumens der pyrogenen Kieselsäure nur solche Partikel enthält, deren Durchmesser kleiner oder gleich dem als $d_{50}$ angegebenen Wert ist.

12. **Katalysator nach Anspruch 11,**
    **dadurch gekennzeichnet,**
    **daß** die pyrogene Kieselsäure eine Halogenid- und/oder Hydroxid-modifizierte Oberfläche aufweist und durch Hydrolyse und/oder Kondensation eine Vernetzung der Kieselsäure-Partikel in der resultierenden Schicht erzeugt wird.

13. Verfahren zur Verminderung von Stickoxiden enthaltend Stickstoffmonoxid und Stickstoffdioxid in Kohlenwasserstoff-haltigen Dieselmotorenabgasen umfassend die Verfahrensschritte

    • Zugabe von Ammoniak oder einer zu Ammoniak zersetzlichen Vorläuferverbindung als Reduktionsmittel zum zu reinigenden, Stickoxide und Kohlenwasserstoffe enthaltenden Abgas, und
    • Überleiten des resultierenden Gemisches aus Abgas und Reduktionsmittel über einen SCR-Katalysator nach einem der Ansprüche 1 bis 12.

14. Verfahren nach Anspruch 13,
    **dadurch gekennzeichnet,**
    **daß** das Abgas vor der Zugabe von Ammoniak oder einer zu Ammoniak zersetzlichen Vorläuferverbindung über einen Oxidationskatalysator geleitet wird, der wirksam ist, um wenigstens einen Teil des im Abgas enthaltenen Stickstoffmonoxids in Stickstoffdioxid umzuwandeln.

15. Verfahren nach Anspruch 14,
**dadurch gekennzeichnet,**
**daß** der Oxidationskatalysator in Form einer katalytisch aktiven Beschichtung auf einem monolithischen Durchflußwabenkörper und/oder auf einem Wandflußfiltersubstrat vorliegt.

**Figur 1**

**Figur 2**

**Figur 3**

**Figur 4**

**Figur 5**

**Figur 6**

**Figur 7**

**Figur 8**

**Figur 9**

**Figur 10**

**Figur 11**

Figur 12

**EP 2 495 032 A1**

Europäisches
Patentamt

European
Patent Office

Office européen
des brevets

**EUROPÄISCHER RECHERCHENBERICHT**

Nummer der Anmeldung

EP 11 00 1789

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/077738 A1 (CAVATAIO GIOVANNI [US] ET AL) 1. April 2010 (2010-04-01) | 1 | INV. B01D53/94 F01N3/20 |
| Y | * Absätze [0013], [0028]; Ansprüche; Abbildungen *  ----- | 1-4, 13-15 | |
| Y | US 2010/290963 A1 (ANDERSEN PAUL JOSEPH [US] ET AL) 18. November 2010 (2010-11-18) * Absätze [0034], [0035], [0036], [0041], [0060], [0067], [0069]; Ansprüche; Tabellen 1,2 *  ----- | 1-4, 13-15 | |
| A | WO 2009/135588 A1 (UMICORE AG & CO KG [DE]; SEYLER MICHAEL [DE]; SOEGER NICOLA [DE]; ADEL) 12. November 2009 (2009-11-12)  ----- | 1,13 | |

|  | RECHERCHIERTE SACHGEBIETE (IPC) |
|---|---|
|  | B01D F01N |

Der vorliegende Recherchenbericht wurde für alle Patentansprüche erstellt

| Recherchenort | Abschlußdatum der Recherche | Prüfer |
|---|---|---|
| München | 12. September 2011 | Polesak, Helmut |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................................

& : Mitglied der gleichen Patentfamilie, übereinstimmendes
    Dokument

EPO FORM 1503 03.82 (P04C03)

20

**ANHANG ZUM EUROPÄISCHEN RECHERCHENBERICHT**
**ÜBER DIE EUROPÄISCHE PATENTANMELDUNG NR.**

EP 11 00 1789

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2011

| Im Recherchenbericht angeführtes Patentdokument | Datum der Veröffentlichung | Mitglied(er) der Patentfamilie | Datum der Veröffentlichung |
|---|---|---|---|
| US 2010077738 A1 | 01-04-2010 | DE 102009029700 A1 | 01-04-2010 |
| US 2010290963 A1 | 18-11-2010 | CA 2685009 A1 | 06-11-2008 |
|  |  | CN 101730575 A | 09-06-2010 |
|  |  | EP 2150328 A2 | 10-02-2010 |
|  |  | WO 2008132452 A2 | 06-11-2008 |
|  |  | JP 2010524677 A | 22-07-2010 |
|  |  | KR 20100017347 A | 16-02-2010 |
| WO 2009135588 A1 | 12-11-2009 | EP 2296790 A1 | 23-03-2011 |
|  |  | JP 2011519722 A | 14-07-2011 |
|  |  | KR 20110010711 A | 07-02-2011 |
|  |  | US 2011056187 A1 | 10-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1054722 A
- WO 2009135588 A